# EUROPÄISCHE PATENTSCHRIFT

(11) **EP 2 131 945 B1**
(45) Veröffentlichungstag und Bekanntmachung des Hinweises auf die Patenterteilung: **03.04.2013**
(21) Anmeldenummer: 08715675.8
(22) Anmeldetag: 31.01.2008
(51) Int. Cl.: B01D 53/14, B01D 3/00

(54) **VERFAHREN AUF BASIS DER ZWEIPHASENDESTILLATION ZUR NUTZUNG VON NIEDERTEMPERATURWÄRME FÜR DIE REGENERATION VON CO2-LÖSUNGSMITTELN BEI DER CO2-ABTRENNUNG AUS ABGASEN MITTELS CO2-WÄSCHE**
METHOD BASED ON TWO-PHASE DISTILLATION FOR USE OF LOW TEMPERATURE HEAT FOR THE REGENERATION OF CO2 SOLVENTS IN THE CO2 SEPARATION FROM EXHAUST GASES BY MEANS OF CO2 WASHING
PROCÉDÉ SUR LA BASE DE LA DISTILLATION À DEUX PHASES POUR UTILISER DE LA CHALEUR À BASSE TEMPÉRATURE AFIN DE RÉGÉNÉRER DES SOLUTIONS CHARGÉES DE CO2, LORS DE LA SÉPARATION DU CO2 DE GAZ D'ÉCHAPPEMENT PAR LAVAGE PAR CO2

(30) Priorität: 05.03.2007 EP 07004437
(43) Veröffentlichungstag der Anmeldung: 16.12.2009
(73) Patentinhaber: RWE Power Aktiengesellschaft, 45128 Essen (DE)
(72) Erfinder: KRUMBECK, Matthias, 42579 Heiligenhaus (DE); MERTIKAT, Horst, 51465 Bergisch Gladbach (DE); MOSER, Peter, 50859 Köln (DE)
(74) Vertreter: Polypatent
(86) Internationale Anmeldenummer: PCT/EP2008/000743
(87) Internationale Veröffentlichungsnummer: WO 2008/107050

(56) Entgegenhaltungen:
- EP-A- 1 688 173
- US-A- 3 762 133
- US-A1- 2005 169 825
- TOBIESEN F A ET AL: "Study of a Modified Amine-Based Regeneration Unit" INDUSTRIAL AND ENGINEERING CHEMISTRY, PRODUCT RESEARCH AND DEVELOPMENT, AMERICAN CHEMICAL SOCIETY. WASHINGTON, US, Bd. 45, 2006, Seiten 2489-2496, XP007902698 ISSN: 0536-1079

## Beschreibung

### Technisches Gebiet

Die vorliegende Erfindung betrifft ein Verfahren zur Abtrennung von CO₂ aus Abgasen, bei dem in einer Abgaswaschanlage das CO₂ durch ein oder mehrere CO₂-bindende Lösungsmittel aus den Abgasen ausgewaschen wird und bei dem bei der Regeneration des CO₂-beladenen Lösungsmittels eine Strippkomponente verwendet wird. Die Erfindung betrifft des weiteren eine entsprechend ausgerüstete Abgaswaschanlage zur Abtrennung von CO₂ aus Abgasen. Ein weiterer Gegenstand der Erfindung ist ein Verfahren und eine entsprechende Abgaswaschanlage, bei der eine Strippkomponente bei der Regeneration eines CO₂-beladenen Lösungsmittels verwendet wird, wobei diese Strippkomponente über einen zweiten Reboiler, der mit Niedertemperaturwärme betrieben werden kann, erwärmt und anschließend dem Regenerationsprozess wieder zur Verfügung gestellt wird.

### Hintergrund der Erfindung

Mit dem Ziel der Klimavorsorge wird seit einiger Zeit die Reduzierung der Emission von Treibhausgasen, d. h. insbesondere von CO₂ aus Industrieprozessen, angestrebt. Vor dem Hintergrund des bestehenden CO₂-Zertifikatehandels kann eine verminderte CO₂-Freisetzung zudem heute die Wirtschaftlichkeit von Produktionsanlagen steigern, speziell von fossile Brennstoffe nutzenden Kraftwerken zur Stromerzeugung. Deshalb werden derzeit intensiv Möglichkeiten zur CO₂-Abtrennung aus Kraftwerks- bzw. aus sonstigen Industrieabgasen und zur späteren unterirdischen Speicherung des CO₂ untersucht. Innerhalb der nächsten Dekaden wird die CO₂-Wäsche (englisch: post combustion capture) unter den CO₂-Abtrennungstechniken eine herausragende Stellung einnehmen, wenn der CO₂-Ausstoß in diesem Zeitraum signifikant gemindert werden soll.

Die chemische CO₂-Absorption ist derzeit als einzige Technik vergleichsweise einfach großtechnisch nachrüstbar und damit schnell umsetzbar, da im Gegensatz zur IGCC-Technik (Integrated Gasification Combined Cycle) mit Abtrennung oder der Oxyfuel-Technik nicht auf den Neubau bzw. Ersatz der bestehenden CO₂-emittierenden Anlage - nach Ablauf ihrer ökonomisch bedingten Lebensdauer - gewartet werden muss. Zudem ist die Anwendung der CO₂-Wäsche nicht nur auf Rauchgase aus Kraftwerksprozessen beschränkt, sondern allgemein für die CO₂-Abtrennung aus Industrieabgasen, insbesondere aus drucklosen Industrieabgasen, einsetzbar.

Wie bei allen CO₂-Abtrennungstechniken ist jedoch auch die Realisierung der chemischen Absorption mit einem deutlichen Wirkungsgradsverlust verbunden. Die Optimierungsansätze von Chemieanlagenbauem und chemischer Industrie zur Effizienzsteigerung sind bisher im Wesentlichen auf die Verbesserung der Lösungsmittel und einzelner Anlagenkomponenten fokussiert. Zur Wirkungsgradoptimierung des Wäscheprozesses selbst ist derzeit nur wenig bekannt.

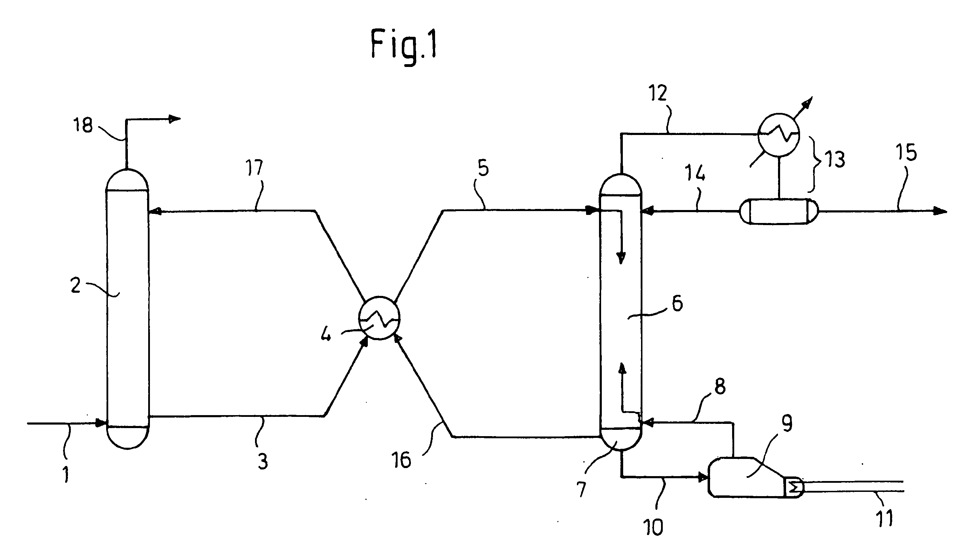

Ein typischer CO₂-Waschprozess des Standes der Technik wird in dem Verfahrensschema in Abbildung 1 gezeigt. Das in einem Abgas (1) enthaltene CO₂ wird in einer Waschkolonne bzw. einem Absorber (2) bei niedriger Temperatur (z. B. 40°C bis 60°C) mit einer wässrigen Lösung der CO₂-bindenden Komponente, im Folgenden beides zusammen kurz "Lösungsmittel" bezeichnet, (z. B. einer Mischung aus Wasser mit Monoethanolamin, MEA) ausgewaschen. Nachdem das CO₂-beladene Lösungsmittel (3) über einen Kreuzstrom-Wärmetauscher (4) vorgewärmt wurde, wird das so vorgewärmte CO₂-beladene Lösungsmittel (5) in den Desorber (6), der auch Stripper genannt wird, eingeleitet. Hier strömt dem flüssigen Lösungsmittel von unten nahe dem Desorber-Sumpf (7) etwa 110°C bis 130°C heißer Dampf (8) entgegen, der im sogenannten Reboiler (9) durch Erhitzen eines Teilstroms (10) des Lösungsmittels mit Hilfe von Niederdruckdampf (11) erzeugt wird. Hier wird typischerweise 4-bar-Dampf verwendet, was dem Druckniveau in der Überströmleitung zwischen dem Mitteldruck- und Niederdruckteil der Dampfturbine in Kraftwerken entspricht. Bei diesen erhöhten Temperaturen gibt das Lösungsmittel das CO₂ wieder ab. Hinter dem Desorber-Kopf wird das heiße CO₂/Wasserdampfgemisch (12) durch Kondensation des Wassers (13) getrennt, wobei das Wasser anschließend dem Prozess zurückgeführt wird (14) und das CO₂ (15) für z.B. die Speicherung zur Verfügung steht. Das heiße CO₂-arme Lösungsmittel (16) wird zur Abkühlung über den Kreuzstrom-Wärmetauscher (4) geführt, um anschließend als abgekühltes CO₂-armes Lösungsmittel (17) dem Wäschekreislauf wieder zur Verfügung zu stehen. Während des Prozesses wird über den Kopf des Absorbers (2) das vom CO₂ befreite Abgas (18) abgeführt.

Der Energiebedarf für die Regeneration des Lösungsmittels, der über den Reboiler eingebracht werden muss, lässt sich in drei Funktionsbereiche aufteilen. Ca. 40 % des Energiebedarfs sind zur Erzeugung von Dampf im Desorber, dem sogenannten Strippdampf, aufzubringen, der den CO₂-Partialdruck über der beladenen Waschlauge im Desorber vermindert, indem das CO₂ dort verdünnt wird. Das Gleichgewicht der CO₂-Freisetzungsreaktion wird so in die gewünschte Richtung getrieben. Weitere ca. 10 % des Energiebedarfs werden für die Erwärmung des vorgewärmten beladenen Lösungsmittels (5) von der Eintrittstemperatur, die ca. 80°C bis 100°C beträgt, auf ca. 110°C bis 130°C benötigt. Ca. 50 % der eingesetzten Energie werden schließlich für das Aufbrechen der chemischen Bindung zwischen CO₂ und dem Lösungsmittel benötigt.

Als Wärmequelle für die Regeneration dient bei den derzeitig am Markt verfügbaren Verfahren in der Regel 4-bar-Dampf (Niederdruckdampf, ND-Dampf). Da erhebliche Niederdruckdampfmengen benötigt werden, steht in Kraftwerken entsprechend weniger Dampf in dem Niederdruckteil der Dampfturbine zur Stromerzeugung zur Verfügung. Bei einem nicht optimierten Waschprozess können bis zu 70 % der Niederdruckdampfmenge eines Kraftwerkblockes nur für die Regeneration des CO₂-Lösungsmittels benötigt werden. Dies hat zur Folge, dass sich allein durch die Niederdruckdampfentnahme der elektrische Wirkungsgrad eines Kraftwerkes um bis zu 11 Prozentpunkte verringert, wobei der elektrische Eigenbedarf der Abtrennungsanlage und des CO₂-Kompressors hierbei noch nicht berücksichtigt ist.

Der Erfindung liegt somit die Aufgabenstellung zugrunde, den in Abbildung 1 gezeigten Regenerationsprozess einer CO₂-Wäsche des Standes der Technik derart zu modifizieren, dass sich die für die Erzeugung des Strippdampfes im Reboiler benötigte Niederdruckdampfmenge verringert, ggf. die Regenerierungstemperatur im Reboiler bzw. Desorber für das CO₂-Lösungsmittel abgesenkt wird, was wiederum zu einem weiteren, geringeren Verbrauch an Niederdruckdampf führen würde. Eine weitere Aufgabenstellung der Erfindung besteht darin, bisher im Kraftwerksprozess weitgehend ungenutzte Niedertemperaturwärme, bei der die Temperatur des Heizmediums <100°C bei atmosphärischem Druck beträgt, statt des wertvollen Niederdruckdampfes zur Regeneration des Lösungsmittels nutzen zu können.

### Beschreibung der Erfindung

Die gestellte Aufgabe wird dadurch gelöst, dass in einem Verfahren zur Abtrennung von CO₂ aus Abgasen, bei dem in einer Abgaswaschanlage das CO₂ durch ein oder mehrere CO₂-bindende Lösungsmittel aus den Abgasen ausgewaschen wird, bei der Regeneration des CO₂-beladenen Lösungsmittels eine Strippkomponente verwendet wird. Als Strippkomponente kann eine am Markt verfügbare Chemikalie verwendet werden, die mit der Waschlauge im wesentlichen nicht mischbar ist, mit dieser praktisch nicht reagiert und die einen höheren Dampfdruck, also eine niedrigere Siedetemperatur, als diese aufweisen sollte. Beispielsweise kommen als Strippkomponenten Alkane, etwa Fluoralkane, in Betracht.

Die Erfindung macht sich den bei der sogenannten Wasserdampf- bzw. Trägerdampfdestillation bekannten Effekt zu Nutzen, dass bei der Destillation zweier nicht mischbarer und nicht miteinander reagierender Flüssigkeiten - hier CO₂-Lösungsmittel und Strippkomponente - dieses Gemisch bereits bei einer niedrigeren Temperatur zu sieden beginnt, als die niedrigste Siedetemperatur der beiden reinen Komponenten. Das Vorhandensein der zweiten Komponente, also der Strippkomponente, hat also zur Folge, dass die Mischung bereits siedet, bevor die einzelnen reinen Komponenten ihren Siedepunkt erreicht haben. Die Zusammensetzung der Dampfphase bzw. des kondensierten Destillats ist von der absoluten Menge der beiden Komponenten unabhängig. Die beiden Stoffe finden sich daher darin im Verhältnis ihrer Dampfdrücke bei der Siedetemperatur wieder, also

Stoffmenge Lösungsmittel : Stoffmenge Strippkomponente = p_{Lsgm} : p_{Stripp}.

Neben der Nicht-Mischbarkeit mit dem CO₂-Lösungsmittel kann durch geeignete Wahl der Strippkomponente im Hinblick auf ihren Dampfdruck, ihren Siedepunkt und ihre Verdampfungsenthalpie und unter Berücksichtigung der Temperaturabhängigkeit der CO₂-Freisetzung aus dem beladenen CO₂-Lösungsmittel zum einen der Energiebedarf für die Strippdampferzeugung reduziert werden, z. B. in einer der weiter unten beschriebenen Ein-Reboiler-Varianten, und zum anderen kann Niedertemperaturwärme in den CO₂-Waschprozess eingekoppelt werden, z. B. in den unten beschriebenen Zwei-Reboiler-Varianten.

Im erfindungsgemäßen Verfahren umfasst die verwendete Abgaswaschanlage jeweils zumindest eine Absorberkolonne (Waschkolonne), eine Desorberkolonne, einen zwischen Absorber- und Desorberkolonne vorgesehenen Wärmetauscher, vorzugsweise ein Kreuzstrom-Wärmetauscher, einen mit dem Knopf der Desorberkolonne verbundenen Kondensator und einen mit dem Sumpf der Desorberkolonne verbundenen Reboiler.

Das erfindungsgemäße Verfahren wird analog zu dem oben beschriebenen und in Abbildung 1 gezeigten klassischen CO₂-Waschprozess betrieben, wobei jedoch die dem Prozess hinzugefügte Strippkomponente am Kondensator zusammen mit dem Wasser aus dem Lösungsmittel kondensiert und gemeinsam mit diesem in die Desorberkolonne zurückgeführt wird.

Im erfindungsgemäßen Verfahren umfasst die Abgaswaschanlage zusätzlich einen dem Kondensator nachgeschalteten Abscheider, der die Strippkomponente von dem CO₂-bindenden Lösungsmittel trennt. Anschließend kann dann die Strippkomponente getrennt vom CO₂-bindenden Lösungsmittel in den Desorber zurückgeführt werden.

Der Vorteil des erfindungsgemäßen Verfahrens besteht darin, dass der Energiebedarf für die Strippdampferzeugung reduziert werden kann, da als Strippdampf nicht mehr allein z. B. Wasserdampf verwendet wird, sondern ein die Strippkomponente enthaltendes Dampfgemisch mit höherem Dampfdruck als ohne Strippkomponente.

Im erfindungsgemäßen Verfahren können auch Strippkomponenten verwendet werden, die einen relativ hohen Siedepunkt haben, also T >100°C, sofern unter Berücksichtigung des Typs und der eingesetzten Menge der Strippkomponente insgesamt eine Siedepunkterniedrigung der Waschlauge erreicht wird und der Strippeffekt als treibende Kraft die durch die - aufgrund der Siedepunkterniedrigung - gesenkte Temperatur im Desorber geminderte CO₂-Freisetzungstendenz übertrifft.

Vorteil des erfindungsgemäßen Verfahren ist, dass durch Abtrennung des Lösungsmittels von der Strippkomponente beide Komponenten in der Waschanlage getrennt voneinander geführt werden können und z. B. an unterschiedlichen Stellen in der Desorberkolonne eingebracht werden oder verschiedenen Prozesszwischenschritten unterworfen werden können.

In einer alternativen und bevorzugten weiteren Variante (Variante 1) des erfindungsgemäßen Verfahrens umfasst die Abgaswaschanlage zusätzlich einen dem Abscheider nachgeschalteten zweiten Reboiler, der die abgetrennte Strippkomponente erwärmt und von dem aus die Strippkomponente direkt in den Desorbersumpf zurückgeführt wird.

In einer anderen Variante (Variante 2) dieser Ausführungsform wird die im zweiten Reboiler erwärmte Strippkomponente nicht direkt in den Desorbersumpf, sondern via den ersten Reboiler in den Desorber zurückgeführt. Bei dieser Variante wird also die Strippkomponente im zweiten Reboiler zunächst vorgewärmt und anschließend im ersten Reboiler gemeinsam mit dem Reboilerumlauf der Desorberkolonne auf die Temperatur von 110°C bis 130°C erwärmt, bevor das Gemisch aus Lösungsmittel und Strippkomponente gemeinsam in den Desorber zurückgeführt wird.

In einer besonders bevorzugten Ausführungsform der beiden zuvor genannten Varianten 1 und 2 wird der zweite Reboiler mit Niedertemperaturwärme betrieben. Niedertemperaturwärme stellt eine im Kraftwerksprozess weitgehend ungenutzte Wärmequelle dar und fällt z. B. im Wasserdampfkreislauf oder bei der Kohletrocknung eines Trockenbraunkohle-Kraftwerks an. Die Temperatur des Heizmediums bei der Niedertemperaturwärme liegt bei unter ca. 105°C. Niedertemperaturwärme wird hier im Sinne des Wärmeinhalts kondensierten Dampfes (Kondensat) bei atmosphärischem Druck oder im Sinne des Wärmeinhalts eines bei dieser Temperatur geflashten Kondensats definiert.

Wenn bei der oben genannten Variante 1 des erfindungsgemäßen Verfahrens - bei der also die im zweiten Reboiler erwärmte Strippkomponente direkt in den Desorber zurückgeführt wird - der zweiten Reboiler mit Niedertemperaturwärme betrieben wird, ist es vorteilhaft, den Siedepunkt der Strippkomponente so zu wählen, dass er unter 100°C liegt bzw. so, dass die Niedertemperaturwärme ausreicht, die Strippkomponente zu verdampfen, so dass direkt ein Strippkomponentendampf in den Desorber eingebracht werden kann.

Bei der zuvor beschriebenen Variante 2 des Verfahrens - also bei der die im zweiten Reboiler erwärmte Strippkomponente in den ersten Reboiler überführt wird - kann der Siedepunkt der Strippkomponente auch über 100°C liegen, da die Dampferzeugung dann im ersten Reboiler erfolgt und der zweite Reboiler nur der Vorerwärmung der Strippkomponente dient.

Vorteil der Varianten 1 und 2 des erfindungsgemäßen Verfahrens ist, dass hier die geringwertige Niedertemperaturwärme in den CO₂-Wäscheprozess eingekoppelt werden kann. Auf diese Weise kann der Bedarf an wertvollem Niederdruckdampf zur Regeneration des Lösungsmittels im CO₂-Wäscheprozess deutlich verringert werden.

In einer weiteren nicht erfindungsgemäßen Variante (Vatiante 3) des Verfahrens wird die am Abscheider abgetrennte Strippkomponente direkt in den ersten Reboiler - ohne Umweg über einen zweiten Reboiler - überführt und dort gemeinsam mit dem Sumpfstrom der Desorberkolonne erhitzt und dann in den Desorber zurückgeführt. Bei dieser Variante kann der Siedepunkt der Komponente ohne weiteres oberhalb von 100°C liegen, da der Reboiler vorzugsweise mit 4-bar-Dampf betrieben wird und nicht mit Niedertemperaturwärme.

Ein weiterer bisher nicht genannter Vorteil aller drei Varianten des Verfahrens ist, dass aufgrund des niedrigeren Siedepunktes des Lösungsmittel/Strippkomponenten-Gemisches die Reboiler bei niedrigeren Temperaturen betrieben werden können. Dies führt einerseits zur Senkung der Energiekosten und hat andererseits aber auch den Vorteil, dass eine geringere Degradation, also Zersetzung, des Lösungsmittels erfolgt. Das führt zu einer weiteren Senkung der Betriebskosten, da das Lösungsmittel seltener ersetzt werden muss.

Bei den oben beschriebenen erfindungsgemäßen Verfahren zur Abtrennung von CO₂ aus Abgasen, wobei als CO₂-enthaltende Abgase Verbrennungsabgase aus Kraftwerksprozessen oder sonstige Industrieabgase, insbesondere drucklose Industrieabgase, in Frage kommen, wird als CO₂-bindendes Lösungsmittel entweder ein nichtwässriges, z.B. aus der Gruppe der ionischen Flüssigkeiten, oder ein wässriges Lösungsmittel verwendet.

Als wässrige CO₂-Lösungsmittel können Amine, Ammoniak, Aminosäuren, Alkali- und Erdalkalicarbonate Verwendung finden. Insbesondere kommen jedoch wässrige Amine zum Einsatz, wobei Monoethanolamin, Methyldiethanolamin und/oder sterisch gehinderte Amine die gebräuchlichsten und bevorzugtesten sind. Die genannten Amine werden dabei in einem 5 bis 50 Gew.-%igen Anteil in wässriger Lösung verwendet.

Bekanntestes Lösungsmittel für die CO₂-Abtrennung aus Prozessgasen oder z. B. aus Erdgas ist Monoethanolamin, das je nach Prozessanbieter als 20 oder 30 Gew.-%ige wässrige Lösung eingesetzt wird. Bezüglich der Aufnahmekapazität des Lösungsmittels mit CO₂, seiner Oxidationsstabilität, seiner Korrosivität und insbesondere des Wärmebedarfs für die Regeneration, bieten sterisch gehinderte Amine einen deutlichen Vorteil, sind aber spezifisch teurer. Methyldiethanolamin wird vorteilhaft bei druckaufgeladenen, sauerstofffreien Prozessen angewendet und weist einen vergleichsweise kleinen Energiebedarf für die Regeneration auf. Bei atmosphärischem Druck benötigt Methyldiethanolamin allerdings den Zusatz von Aktivatoren, also insbesondere von Aminen mit schnellerer CO₂-Bindungsreaktion, aber niedrigerer Beladbarkeit, als das eigentlich CO₂-bindende Amin in dem CO₂-Lösungsmittel, z.B. Piperazin.

Ein weiterer Gegenstand der Erfindung ist eine Abgaswaschanlage zur Abtrennung von CO₂ aus Abgasen, insbesondere aus Verbrennungsabgasen aus Kraftwerksprozessen oder aus sonstigen Industrieabgasen, wobei diese Abgaswaschanlage zumindest eine Absorberkolonne, eine Desorberkolonne, einen zwischen Absorber- und Desorberkolonne vorgesehenen Wärmetauscher, einen mit dem Kopf der Desorberkolonne verbundenen Kondensator und einen mit dem Sumpf der Desorberkolonne verbundenen Reboiler sowie zusätzlich einen dem Kondensator nachgeschalteten Abscheider, der eine Strippkomponente von einem Kondensat abtrennt, umfasst. Das Kondensat besteht dabei insbesondere aus der Strippkomponente und dem Wasseranteil des CO₂-bindenden Lösungsmittels. Diese erfindungsgemäße Abgaswaschanlage eignet sich zum Betreiben aller Varianten 2 bis 5 des erfindungsgemäßen Verfahrens zur Abtrennung von CO₂ aus Abgasen.

In der erfindungsgemäßen Abgaswaschanlage umfasst die Abgaswaschanlage zusätzlich einen dem Abscheider nachgeschalteten zweiten Reboiler, von dem aus die Strippkomponente entweder direkt (Variante 1) oder via den ersten Reboiler (Variante 2) in den Desorber bzw. Desorbersumpf zurückgeführt wird. Diese Ausführungsformen der erfindungsgemäßen Abgaswaschanlage eignen sich zum Betreiben der Varianten 1 bzw. 2 des erfindungsgemäßen Verfahrens zur Abtrennung von CO₂ aus Abgasen.

In einer besonders bevorzugten Ausführungsform der zuvor genannten erfindungsgemäßen Abgaswaschanlagen ist der zweite Reboiler ein mit Niedertemperaturwärme betriebener Reboiler.

In einer anderen Ausführungsform der Abgaswaschanlage wird von dem Abscheider aus die Strippkomponente entweder direkt oder via den ersten Reboiler (Variante 3) in den Desorber zurückgeführt. Ein zweiter Reboiler ist hier nicht vorgesehen.

Ganz allgemein ist somit Gegenstand der vorliegenden Erfindung auch die Verwendung einer Strippkomponente bei der Regeneration eines CO₂-beladenen Lösungsmittels in einem Verfahren zur Abtrennung von CO₂ aus Abgasen in einer Abgaswaschantage.

Des weiteren ist die Verwendung eines einem Kondensator nachgeschalteten Abscheiders und eines dem Abscheider nachgeschalteten Reboilers in einem Verfahren zur Abtrennung von CO₂ aus Abgasen in einer Abgaswaschanlage, wobei der zweite Reboiler optional ein mit Niedertemperaturwärme betriebener Reboiler sein kann, Gegenstand der vorliegenden Erfindung.

Abbildung 1 zeigt eine klassische CO₂-Waschanlage nach dem Stand der Technik, die bereits oben näher erläutert wurde.

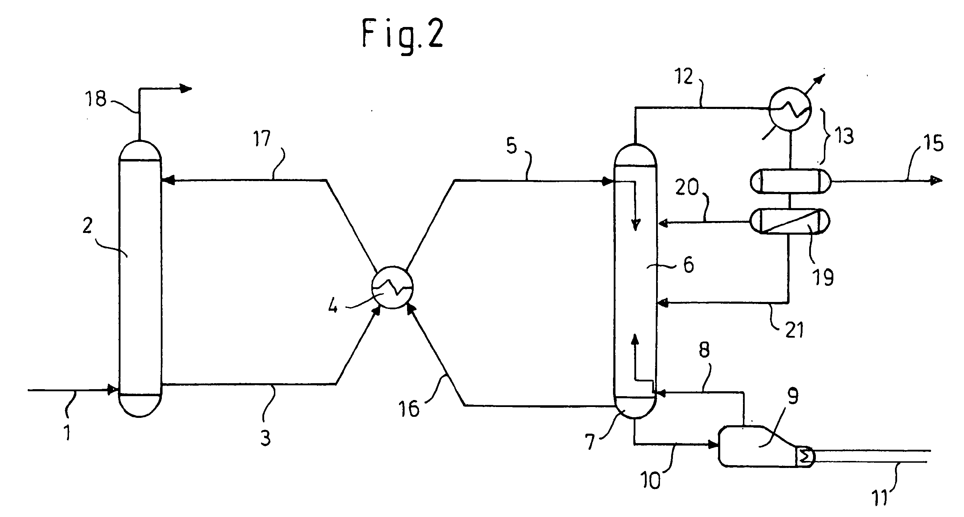

Abbildung 2 zeigt eine nicht erfindungsgemäße Abgaswaschanlage, mit der ein Abgaswaschverfahren betrieben werden kann. Von der in Abbildung 1 gezeigten klassischen Anlage unterscheidet sich diese Anlage dadurch, dass diese einen dem Kondensator (13) nachgeschalteten Abscheider (19) umfasst, mit dessen Hilfe die Strippkomponente getrennt vom Lösungsmittel in den Desorber (6) zurückgeführt wird. Die Rückführung des abgetrennten Lösungsmittels erfolgt über die Leitung (20) und nicht über die in Abbildung 1 gezeigte Leitung (14). Weiterhin umfasst die Anlage eine Leitung (21) mit der die im Abscheider (19) abgetrennte Strippkomponente in den Desorber (6) zurückgeführt wird. Ein zweiter Reboiler (23) ist nicht vorgesehen.

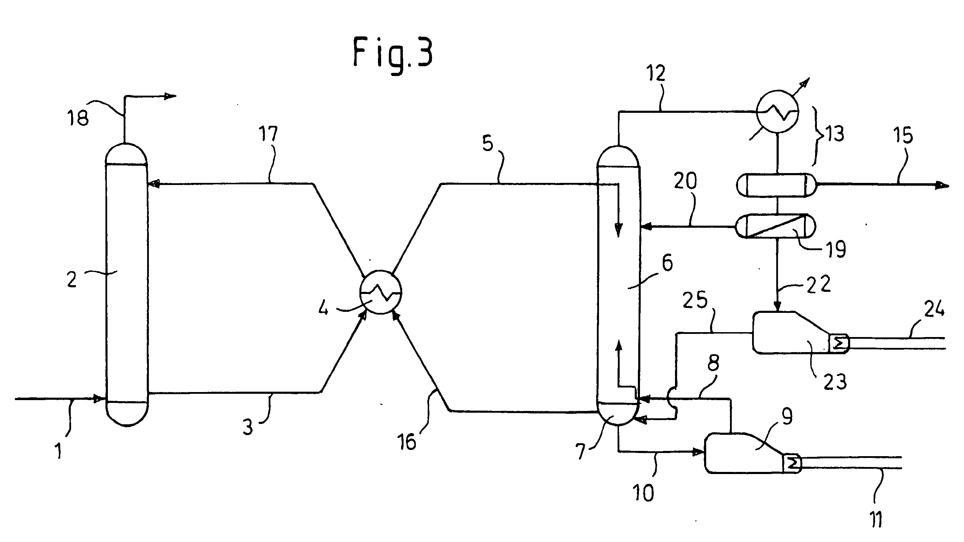

Abbildung 3 zeigt eine erfindungsgemäße Abgaswaschanlage, mit der das Abgaswaschverfahren gemäß Variante 1 betrieben werden kann. Von der in Abbildung 2 gezeigten Anlage unterscheidet sich diese Anlage dadurch, dass diese einen dem Abscheider (19) nachgeschalteten und mit diesem über die Leitung (22) verbundenen zweiten Reboiler (23) umfasst, von dem aus die Strippkomponente - erwärmt oder gegebenenfalls als Dampf - über die Leitung (25) in den Desorbersumpf (7) zurückgeführt wird. Der zweiten Reboiler (23) wird über die Leitung (24) mit z. B. Niederdruckdampf oder vorzugsweise mit Niedertemperaturwärme versorgt.

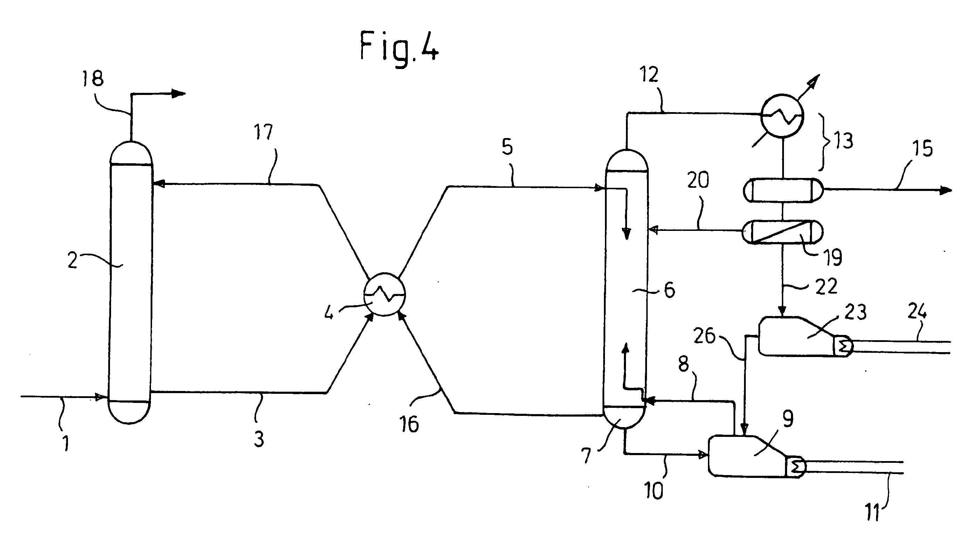

Abbildung 4 zeigt eine erfindungsgemäße Abgaswaschanlage auf, mit der das Abgaswaschverfahren gemäß Variante 2 betrieben werden kann. Von der in Abbildung 3 gezeigten Anlage unterscheidet sich diese Anlage dadurch, dass die von dem zweiten Reboiler (23) aus kommende erwärmte Strippkomponente - gegebenenfalls auch dampfförmig - nicht über die in Abbildung 3 gezeigte Leitung (25) in den Desorber (6) zurückgeführt wird, sondern über die Leitung (26) in den ersten Reboiler (9) und erst von dort aus in den Desorber (6).

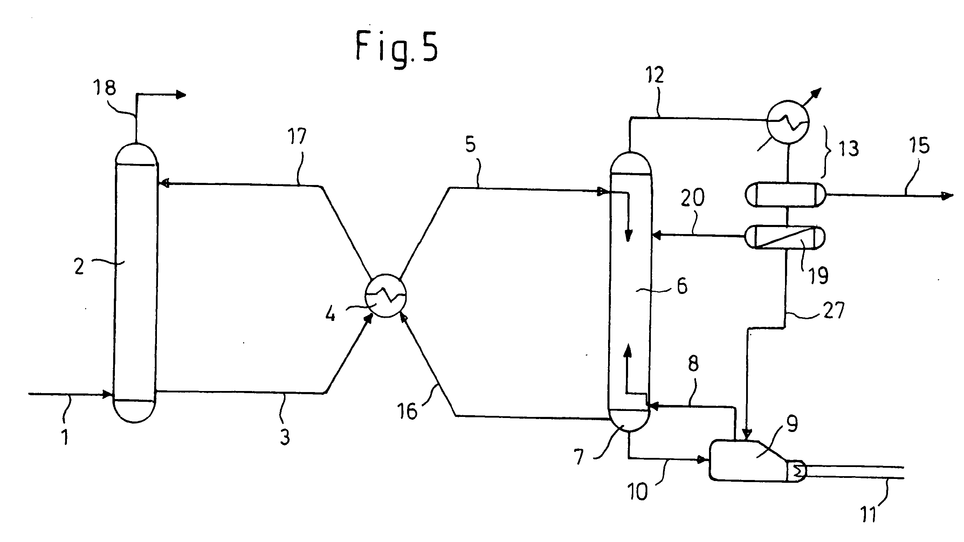

Abbildung 5 zeigt eine nicht erfindungsgemäße Abgaswaschanlage, mit der das Abgaswaschverfahren gemäß Variante 3 betrieben werden kann. Von der in Abbildung 4 gezeigten Anlage unterscheidet sich diese Anlage dadurch, dass die von dem Abscheider (19) aus kommende Strippkomponente über die Leitung (27) direkt in den ersten Reboiler (9) überführt wird und erst von dort aus in den Desorber (6). Eine Vorwärmung in einem zweiten Reboiler (23) ist hier nicht vorgesehen.

### Bezugszeichenliste

- (1): Leitung für CO₂-enthaltende Abgase
- (2): Absorberkolonne (Absorber)
- (3): Leitung für CO₂-beladenes Lösungsmittel
- (4): Wärmetauscher (z. B. Kreuzstrom-Wärmetauscher)
- (5): Leitung für vorgewärmtes CO₂-beladenes Lösungsmittel
- (6): Desorberkolonne (Desorber)
- (7): Desorbersumpf
- (8): Leitung für vom ersten Reboiler (9) kommenden heißen Dampf
- (9): erster Reboiler
- (10): Leitung für Sumpfstrom des Desorbers zum ersten Reboiler (9)
- (11): Niederdruckdampfleitung
- (12): Leitung für heißes CO₂/Wasserdampf/ggf. Strippkomponente-Gemisch vom Desorberkopf zum Kondensator (13)
- (13): Kondensator
- (14): Leitung vom Kondensator zum Desorber
- (15): Leitung für CO₂ vom Kondensator
- (16): Leitung für heißes CO₂-armes Lösungsmittel vom Desorbersumpf kommend
- (17): Leitung für abgekühltes CO₂-armes Lösungsmittel vom Wärmetauscher kommend und zum Absorber (2) führen
- (18): Leitung für Abgas (z. B. N₂) vom Absorberkopf kommend
- (19): Abscheider
- (20): Leitung für abgetrenntes Lösungsmittel vom Abscheider zum Desorber
- (21): Leitung für abgetrennte Strippkomponente vom Abscheider zum Desorber
- (22): Leitung vom Abscheider zum zweiten Reboiler (23)
- (23): zweiter Reboiler
- (24): Niederdruckdampfleitung oder Niedertemperaturwärmeleitung
- (25): Leitung vom zweiten Reboiler (23) zum Desorbersumpf (7)
- (26): Leitung vom zweiten Reboiler (23) zum ersten Reboiler (9)
- (27): Leitung vom Abscheider zum ersten Reboiler (9)

## Patentansprüche

1. Verfahren zur Abtrennung von CO₂ aus Abgasen, wobei in einer Abgaswaschanlage das CO₂ durch ein oder mehrere CO₂-bindende wässrige Lösungsmittel aus den Abgasen ausgewaschen wird und bei der Regeneration des CO₂-beladenen Lösungsmittels eine Strippkomponente verwendet wird, wobei die Strippkomponente mit dem Lösungsmittel im angewendeten Temperaturbereich im Wesentlichen nicht mischbar ist, mit diesem keine chemischen Reaktionen eingeht und eine niedrigere Siedetemperatur als dieses aufweist, wobei die Abgaswaschanlage jeweils zumindest eine Absorberkolonne (2), eine Desorberkolonne (6), einen zwischen Absorber- und Desorberkolonne vorgesehenen Wärmetauscher (4), einen mit dem Kopf der Desorberkolonne verbundenen Kondensator (13) und einen mit dem Sumpf der Desorberkolonne verbundenen Reboiler (9) umfasst, wobei die Strippkomponente am Kondensator (13) zusammen mit dem Wasser aus dem CO₂-bindenden Lösungsmittel kondensiert wird, **dadurch gekennzeichnet, dass** die Abgaswaschanlage zusätzlich einen dem Kondensator (13) nachgeschalteten Abscheider (19), der die Strippkomponente von dem Wasser aus dem CO₂-bindenden Lösungsmittel trennt, umfasst und zusätzlich einen dem Abscheider (19) nachgeschalteten zweiten Reboiler (23) umfasst, der die vom CO₂-bindenden Lösungsmittel getrennte Strippkomponente erwärmt oder verdampft und von dem aus die erwärmte oder dampfförmige Strippkomponente entweder direkt in den Desorbersumpf (7) oder via den ersten Reboller (9) in den Desorber (6) zurückgeführt wird.

2. Verfahren gemäß Anspruch 1, wobei die Abgase Verbrennungsabgase aus Kraftwerksprozessen oder sonstige Industrieabgase sind.

3. Verfahren gemäß einem der vorhergehenden Ansprüche, wobei das CO₂-bindende Lösungsmittel ein wässriges Amin ist.

4. Verfahren gemäß Anspruch 3, wobei das Lösungsmittel eine 5 bis 50 Gew.-% Amin, insbesondere Monoethanolamin, Methyldiethanolamin und/oder ein sterisch gehindertes Amin, enthaltende wässrige Lösung ist.

5. Verfahren gemäß Anspruch 1, wobei die Strippkomponente ein Alkan, insbesondere ein Fluoralkan, ist.

6. Verfahren gemäß einem der vorhergehenden Ansprüche, wobei der zweite Reboiler (23) mit Niedertemperaturwärme betrieben wird, wobei die Temperatur des Heizmediums bei unter 105°C liegt.

7. Abgaswaschanlage zur Abtrennung von CO₂ aus Abgasen, insbesondere aus Verbrennungsabgasen aus Kraftwerksprozessen oder aus sonstigen Industrieabgasen, umfassend - jeweils zumindest - eine Absorberkolonne (2), eine Desorberkolonne (6), einen zwischen Absorber- und Desorberkolonne vorgesehenen Wärmetauscher (4), einen mit dem Kopf der Desorberkolonne verbundenen Kondensator (13) und einen mit dem Sumpf der Desorberkolonne verbundenen Reboiler (9), wobei der Kondensator (13) geeignet ist, eine Strippkomponente zusammen mit Wasser aus einem CO₂-bindenden Lösungsmittel zu kondensieren, **dadurch gekennzeichnet, dass** die Abgaswaschanlage zusätzlich einen dem Kondensator (13) nachgeschalteten Abscheider (19) umfasst, der geeignet ist, die Strippkomponente von dem Kondensat abzutrennen, und die Abgaswaschanlage zusätzlich einen dem Abscheider (19) nachgeschalteten zweiten Reboiler (23) umfasst, von dem aus die Strlppkomponente - erwärmt oder dampfförmig - entweder direkt in den Desorbersumpf oder via den ersten Reboiler (9) in den Desorber (6) zurückgeführt werden kann.

8. Abgaswaschanlage gemäß Anspruch 7, wobei der zweite Reboiter (23) ein Reboiler ist, der mit Niedertemperaturwärme betrieben werden kann, wobei die Temperatur des Heizmediums bei unter 105°C liegt.

## Claims

1. A method for the separation of CO₂ from exhaust gases, wherein the CO₂ is washed out from the exhaust gases in an exhaust gas washing system by means of one or more CO₂-binding aqueous solvents and a stripping component is used for the regeneration of the solvent loaded with CO₂, wherein the stripping component is substantially immiscible with the solvent in the temperature range used, does not enter into any chemical reactions with it and has a lower boiling point than it, wherein the exhaust gas washing system comprises at least an absorber column (2), a desorber column (6), a heat exchanger (4) provided between the absorber column and the desorber column, a condenser (13) connected with the head of the desorber column and a reboiler (9) connected with the bottom of the desorber column, wherein the stripping component is condensed in the condenser (13) together with the water from the CO₂-binding solvent, **characterised in that** the exhaust gas washing system additionally comprises a separator (19) downstream of the condenser (13), which separates the stripping component from the water from the CO₂-binding solvent, and additionally comprises a second reboiler (23) downstream of the separator (19), which heats or evaporates the stripping component that has been separated from the CO₂-binding solvent and from which the heated or vaporised stripping component is recycled either directly into the bottom of the desorber (7) or via the first reboiler (9) into the desorber (6).

2. The method according to claim 1, wherein the exhaust gases are combustion exhaust gases from power station processes or other industrial exhaust gases.

3. The method according to one of the preceding claims, wherein the CO₂-binding solvent is an aqueous amine.

4. The method according to claim 3, wherein the solvent is an aqueous solution containing 5 to 50 wt.% amine, in particular monoethanolamine, methyldiethanolamine and/or a sterically hindered amine.

5. The method according to claim 1, wherein the stripping component is an alkane, in particular a fluoroalkane.

6. The method according to one of the preceding claims, wherein the second reboiler (23) is operated with low-temperature heat, wherein the temperature of the heating medium is less than 105°C.

7. An exhaust gas washing system for the separation of CO₂ from exhaust gases, in particular from combustion exhaust gases from power station processes or other industrial exhaust gases, comprising - in each case at least - an absorber column (2), a desorber column (6), a heat exchanger (4) provided between the absorber column and the desorber column, a condenser (13) connected with the head of the desorber column and a reboiler (9) connected with the bottom of the desorber column, wherein the condenser (13) is suitable for condensing a stripping component together with water from a CO₂-binding solvent, **characterised in that** the exhaust gas washing system additionally comprises a separator (19) downstream of the condenser (13) which is suitable for separating the stripping component from the condensate, and the exhaust gas washing system additionally comprises a second reboiler (23) downstream of the separator (19), from which the heated or vaporised stripping component can be recycled either directly into the bottom of the desorber or via the first reboiler (9) into the desorber (6).

8. The exhaust gas washing system according to claim 7, wherein the second reboiler (23) is a reboiler which can be operated with low-temperature heat, wherein the temperature of the heating medium is less than 105°C.

## Revendications

1. Procédé d'extraction du CO₂ depuis des gaz de fumée, dans lequel, dans une installation de lavage de gaz de fumée, le CO₂ est extrait par lavage des gaz de fumée par un ou plusieurs solvants aqueux susceptibles de lier le CO₂, et dans lequel un composant de stripage est utilisé pour la régénération du solvant chargé en CO₂, le composant de stripage n'étant pas notablement miscible avec le solvant dans l'intervalle de température utilisé, ne réagissant pas avec ce dernier et présentant une température d'ébullition inférieure à celle de ce dernier, sachant que l'installation de lavage de gaz de fumée comprend respectivement au moins une colonne d'absorption (2), une colonne de désorption (6), un échangeur de chaleur (4) prévu entre les colonnes d'absorption et de désorption, un condenseur (13) relié à la tête de la colonne de désorption et un bouilleur (9) relié au bas de la colonne de désorption, le composant de stripage étant condensé ensemble avec l'eau provenant du solvant liant le CO₂ dans le condenseur (13), **caractérisé en ce que** l'installation de lavage de gaz de fumée comprend en plus un séparateur (19) disposé en aval du condenseur (13), qui sépare le composant de stripage de l'eau provenant du solvant liant le CO₂, et comprend en plus un deuxième bouilleur (23) disposé en aval du séparateur (19), qui réchauffe ou vaporise le composant de stripage séparé du solvant liant le CO₂, et duquel le composant de stripage réchauffé ou sous forme de vapeur est renvoyé soit directement dans le fond du désorbeur (7), soit dans le désorbeur (6) par l'intermédiaire du premier bouilleur (9).

2. Procédé selon la revendication 1, dans lequel les gaz de fumée sont des gaz de combustion provenant de processus de centrale thermique ou d'autres gaz de fumée industriels.

3. Procédé selon l'une quelconque des revendications précédentes, dans lequel le solvant liant le CO₂ est une amine aqueuse.

4. Procédé selon la revendication 3, dans lequel le solvant est une solution aqueuse contenant de 5 à 50 % en poids d'amine, en particulier de monoéthanolamine, de méthyldiéthanolamine et/ou d'une amine à empêchement stérique.

5. Procédé selon la revendication 1, dans lequel le composant de stripage est un alcane, en particulier un fluoroalcane.

6. Procédé selon l'une quelconque des revendications précédentes, dans lequel on fait fonctionner le deuxième bouilleur (23) avec de la chaleur à basse température, la température du caloporteur chauffant étant inférieure à 105 °C.

7. Installation de lavage de gaz de fumée pour l'extraction du CO2 depuis des gaz de fumée, en particulier depuis des gaz de combustion provenant de processus de centrale thermique ou d'autres gaz de fumée industriels, comprenant - dans chaque cas au minimum - une colonne d'absorption (2), une colonne de désorption (6), un échangeur de chaleur (4) prévu entre les colonnes d'absorption et de désorption, un condenseur (13) relié à la tête de la colonne de désorption et un bouilleur (9) relié au bas de la colonne de désorption, le condenseur (13) pouvant condenser un composant de stripage ensemble avec l'eau provenant du solvant liant le CO2, **caractérisé en ce que** l'installation de lavage de gaz de fumée comprend en plus un séparateur (19) disposé en aval du condenseur (13), capable de séparer le composant de stripage du condensat, et **en ce que** l'installation de lavage de gaz de fumée comprend en plus un deuxième bouilleur (23) monté en aval du séparateur (19) depuis lequel le composant de stripage - réchauffé ou sous forme de vapeur - peut être renvoyé soit directement dans le fond du désorbeur, soit dans le désorbeur (6) par l'intermédiaire du premier bouilleur (9).

8. Installation de lavage de gaz de fumée selon la revendication 7, dans laquelle le deuxième bouilleur (23) est un bouilleur que l'on peut faire fonctionner avec de la chaleur à basse température, la température du caloporteur chauffant étant inférieure à 105 °C.
